Europäisches Patentamt

European Patent Office

Office européen des brevets

(19)

(11) EP 0 585 632 B1

(12) **FASCICULE DE BREVET EUROPEEN**

(45) Date de publication et mention
de la délivrance du brevet:
**06.11.1996 Bulletin 1996/45**

(51) Int. Cl.[6]: **A23F 5/44**, A23L 1/20

(21) Numéro de dépôt: **93112387.1**

(22) Date de dépôt: **03.08.1993**

(54) **Produit alimentaire à base de fèves de soja et son procédé d'obtention**

Sojabohnen-nahrungsmittel und Verfahren zur dessen Herstellung

Sojbean food product and process for preparing same

(84) Etats contractants désignés:
**AT BE CH DE DK ES FR GB GR IE IT LI LU NL PT
SE**

(30) Priorité: **01.09.1992 CH 2736/92**

(43) Date de publication de la demande:
**09.03.1994 Bulletin 1994/10**

(73) Titulaire: **SOCIETE DES PRODUITS NESTLE S.A.
1800 Vevey (CH)**

(72) Inventeurs:
 • **Pictet, Gérard**
 **CH-1005 Lausanne (CH)**
 • **Rehacek, Josef**
 **CH-1400 Yverdon (CH)**

(74) Mandataire: **Vuille, Roman et al
Avenue Nestlé 55
1800 Vevey (CH)**

(56) Documents cités:
AU-B-  515 645          FR-A-  478 313
GB-A-  M24 535          US-A- 4 522 833
US-H-     673

## Description

La présente invention a trait à un procédé de préparation d'une matière alimentaire à base de soja, permettant la préparation d'un produit pulvérulent pouvant être utilisé dans la préparation de boissons froides ou chaudes. La présente invention concerne également un procédé de préparation dudit produit pulvérulent.

Il est connu de préparer des boissons froides ou chaudes à partir de grains de café préalablement torréfiés, par mouture desdits grains et extraction à l'eau chaude. On obtient ainsi une boisson au goût particulier de café, généralement agréable.

FR-A-478 313 décrit un procédé de préparation d'un café aux fèves de soja dans lequel on traite d'abord les fèves de soja avec de l'eau chaude contenant de l'acide chlorhydrique faible ou par vaporisation prolongée. Puis, on traite les fèves fortement gonflées dans des récipients chauffés avec une solution sucrée. Puis, on torréfie les fèves.

GB-A-24 535 décrit un procédé de préparation d'un café aux fèves de soja dans lequel on lave les fèves de soja avec de l'eau. Puis on sèche les fèves à 160 à 190°C et les trempe dans de l'eau contenant du sucre. Enfin, on torréfie les fèves.

US-A-H673 décrit un procédé de préparation d'un café aux fèves de soja dans lequel on trempe les fèves dans de l'eau contenant du sucre. Puis on chauffe les fèves à 204°C et les torréfie.

AU-B-515 645 décrit un procédé de préparation d'un enrobage des fèves. D'abord, on spraye une solution aqueuse contenant du sucre sur les fèves tout en les agitant. Puis on torréfie les fèves.

US-A-4 522 833 décrit un procédé de préparation d'un enrobage des fèves. D'abord, on torréfie les fèves et puis on les enrobe avec un sirop. Enfin, on torréfie les fèves.

La présente invention a pour but de proposer un procédé de préparation d'un produit à partir duquel on peut préparer rapidement et facilement une boisson chaude ou froide. Ledit produit étant à base de soja, il permet l'obtention d'une boisson nutritivement riche, et de surcroît dépourvue de substances physiologiquement actives telles que la caféine et l'acide chlorogénique.

La présente invention a pour premier objet, un procédé de préparation d'une matière alimentaire à base de soja, dans lequel on enrobe des fèves de soja avec une couche glucidique, en sprayant un ou plusieurs composés glucidiques en solution aqueuse sur les fèves, tout en séchant les fèves par circulation d'air chaud, puis on les torréfie.

La présente invention a également pour objet, un procédé pour la préparation d'un produit pulvérulent instantané, dans lequel on moud ladite matière alimentaire, on effectue une extraction aqueuse de la mouture et l'on déshydrate l'extrait obtenu.

Dans la suite de la présente description, les pourcentages et parties sont en poids.

On peut employer comme produit de départ des fèves de soja entières ou en morceaux, décortiquées ou non, présentant généralement un taux d'humidité de l'ordre de 10-12%.

Il est également possible d'employer des fèves de soja concassées et dégraissées, par exemple à l'aide d'hexane, ce qui permet d'éviter la présence d'une quantité importante d'huile dans l'extrait, ce qui aurait un effet négatif sur le stockage de l'extrait aqueux déshydraté.

On peut tout d'abord prétraiter thermiquement ces fèves de manière, d'une part à faciliter leur décorticage en faisant éclater leur enveloppe externe, d'autre part à modifier la couleur de leur surface externe par brunissement.

On peut, par exemple, effectuer le prétraitement thermiquement pendant 4 à 6 minutes, à 180-195°C, à l'aide d'un torréfacteur conventionnel, ou à l'aide d'énergie microondes.

On effectue, de préférence, ladite étape de prétraitement thermique dans le cas où l'on choisit de torréfier fortement ensuite, afin de permettre au composé glucidique de pénétrer plus profondément dans la fève et d'éventuellement s'y développer.

Cette étape peut également permettre d'assurer l'obtention d'une matière alimentaire finale torréfiée uniformément et jusqu'à coeur, et non pas d'une matière alimentaire torréfiée incomplètement, dont la surface extérieure est recouverte du composé glucidique ayant "brûlé".

Les fèves décortiquées peuvent alors être humidifiées, par exemple par injection de vapeur, de manière à obtenir un taux d'humidité de l'ordre de 13-15%.

Cette étape d'humidification permet d'améliorer la porosité des fèves qui gonflent légèrement en présence de la vapeur, ce qui facilite l'enrobage ultérieur et permet une meilleure imprégnation, voire pénétration, du composé glucidique.

Les fèves ainsi obtenues sont alors enrobées avec un composé glucidique.

Ledit composé glucidique peut être choisi dans le groupe constitué par le glucose, le saccharose, le sorbitol, les maltodextrines, la mélasse de canne à sucre et la mélasse de betterave, purs ou en mélange.

On utilise ledit composé glucidique sous forme d'une solution aqueuse, de préférence à une concentration de 30-60%, et qui peut être chauffée à 50-65°C afin de faciliter son emploi.

On peut, par exemple utiliser une solution aqueuse d'un mélange contenant 42-47% de saccharose et 2-7% de sorbitol, mélange qui présente l'avantage, par rapport par exemple à une solution de glucose, de peu coller et de ne pas provoquer l'agglomération des fèves et leur adhésion sur les parois de l'enrobeuse. Ce mélange particulier permet aussi d'obtenir une bonne adhérence de l'enrobage sur la fève.

Le composé glucidique utilisé influençant, d'une part, les conditions d'enrobage et de torréfaction, d'autre part, les caractéristiques de la matière alimentaire finale, on choisit ce composé en fonction des qualités souhaitées pour ladite matière alimentaire finale.

L'enrobage est effectué en sprayant un ou plusieurs composés glucidiques en solution aqueuse sur les fèves, tout en séchant les fèves par circulation d'air chaud.

Il est également possible d'effectuer l'enrobage en plusieurs étapes, en remuant les fèves entre chaque étape, de manière à éviter qu'elles ne collent trop entre elles.

L'enrobage peut aussi être effectué en utilisant un lit fluidisé, ce qui permet l'obtention d'une surface externe de la fève enrobée, lisse.

L'enrobage peut encore être effectué à l'aide d'une enrobeuse, qui en comparaison avec le lit fluidisé, autorise un débit plus rapide et une perte en produit glucidique moins importante, au détriment de la surface externe de la fève, qui est alors beaucoup moins lisse et régulière.

On effectue l'enrobage de manière à obtenir un produit qui présente un rapport composé glucidique/fèves de soja de 5-30/100, mesuré en poids de matière sèche.

Après enrobage, les fèves sont torréfiées, par exemple de manière conventionnelle pendant 4-8 minutes dans un torréfacteur tournant à 70-90 tours par minute avec une température du tambour de 230-250°C (température de l'air 180-210°C), ou à l'aide d'énergie microondes.

Si les fèves ont préalablement été prétraitées thermiquement, la durée de torréfaction peut être ramenée à 2-4 minutes.

En fait, on choisit la durée et la température de torréfaction selon le degré de torréfaction souhaité pour la matière alimentaire finale.

En effet, on a constaté qu'il est possible d'influencer les qualités organoleptiques de l'extrait obtenu après mouture et extraction de ladite matière alimentaire, en fonction du degré de torréfaction.

Ainsi, si l'on torréfie peu, c'est-à-dire 4-6 minutes à 220°C de température de tambour, les fèves enrobées de composé glucidique, on obtient, après avoir moulu la matière alimentaire obtenue et l'avoir extraite à l'eau bouillante, une boisson de couleur claire, riche en protéines et que l'on peut déguster chaude ou froide, dont le goût agréable rappelle celui des noisettes torréfiées.

Par contre, si l'on torréfie de manière plus prononcée, par exemple 8-10 minutes à 230-240°C (température du tambour), on obtient, après extraction à l'eau bouillante de la matière alimentaire moulue, une boisson plus foncée, également riche en protéines dont le goût rappelle celui du café.

On obtient ainsi une matière alimentaire finale se présentant sous forme de fèves de soja enrobées d'un composé glucidique puis torréfiées. Cette matière alimentaire est stable et peut donc être conservée pendant un certain temps sans dommage.

Cette matière alimentaire peut servir de base pour la préparation d'un produit pulvérulent instantané soluble.

Ainsi, on peut tout d'abord moudre ladite matière alimentaire puis l'extraire, d'une manière similaire à l'extraction d'un café moulu, avec de l'eau chaude à 96-98°C, ou bien à une température plus élevée pouvant aller jusqu'à 180°C. On obtient ainsi un extrait que l'on peut consommer tel quel.

Il est également possible de déshydrater l'extrait obtenu, par exemple d'une manière similaire à celle employée dans le domaine du café telle que par évaporation et lyophilisation, ou par pulvérisations successives, de manière à obtenir un produit pulvérulent, soluble dans l'eau et pouvant se reconstituer instantanément.

L'invention est illustrée plus en détail dans les exemples de réalisation qui suivent.

Exemple 1

Soit un kilogramme de fèves de soja décortiquées, présentant un taux d'humidité de 10%, une teneur en sucres totaux, déterminée après hydrolyse, de 25% et en protéines de 50%.

On introduit les fèves de soja dans une enrobeuse de type Glatt-Coater (marque commerciale), dont le tambour tourne à une vitesse de 20 tours par minute. On spraye sur ces fèves une solution aqueuse contenant un mélange de 45% de saccharose et 5% de sorbitol, préalablement chauffée à 60°C. La solution est sprayée à l'aide d'un courant d'air chaud à 70°C, avec un débit horaire de 1 litre.

On effectue cet enrobage pendant environ 30 minutes, de manière à obtenir un produit qui présente un rapport saccharose-sorbitol/fèves de soja de environ 20/100, mesuré en poids de matière sèche.

Les fèves enrobées présentent alors un taux d'humidité relative de environ 14%.

On torréfie ces fèves dans un torréfacteur Probat de type RE-1 (marque commerciale), pendant 7 minutes, à une température du tambour de 240°C.

La perte de matière durant la torréfaction est de 18,5% (eau et matières organiques).

On obtient des fèves enrobées torréfiées présentant un taux d'humidité de 1,5%, et un volume spécifique réel de 0,84 cm3/g.

On peut mesurer, par réflexion, la couleur des fèves obtenues à l'aide d'un colorimètre Hunterlab D25 (marque commerciale), qui va déterminer trois paramètres: L (clarté), a (rouge), b (jaune).

Dans le cas présent, on obtient les valeurs suivantes, mesurées sur la poudre moulue:

$$L = 17,3 \quad a = 4,0 \quad b = 4,1$$

La matière alimentaire ainsi obtenue peut alors être moulue et extraite à l'eau bouillante à 98°C, de manière analogue à l'extraction de grains de café torréfiés.

L'extractibilité de ladite matière alimentaire, correspondant au pourcentage de matière extractible solubilisée, est mesurée à 22-23%.

L'extrait aqueux obtenu se présente sous la forme d'un liquide brun, de goût agréable et particulier, pouvant rappeler celui du café, et ayant comme composition: 18% de sucres totaux et 60% de protéines, en % de matière sèche.

On déshydrate l'extrait aqueux ainsi obtenu par lyophilisation, de manière à obtenir un produit pulvérulent, pouvant se reconstituer instantanément par dissolution dans l'eau froide ou chaude, à raison de 2 à 4 grammes de produit pulvérulent dans 100 ml d'eau.

Exemple 2

Soit 1 kg de fèves de soja décortiquées, présentant un taux d'humidité de 7,9%.

On traite thermiquement ces fèves en les introduisant dans un tortéfacteur usuel de type Probat (marque commerciale), à 185°C, et en les y laissant en agitation pendant 5 minutes.

On obtient ainsi des fèves prétorréfiées, qui ont une couleur brun clair et un taux d'humidité de 6,0%.

On enrobe alors ces fèves avec une solution aqueuse de saccharose à 45%, préalablement chauffée à 60°C, en utilisant un lit fluidisé, et l'air à 70°C comme gaz propulseur de la solution, de manière à obtenir un produit qui présente, en poids, un rapport saccharose/fèves de l'ordre de 20/100, et un taux d'humidité de 10% après enrobage.

On tortéfie les fèves enrobées, à 240°C (température du tambour), pendant 7 minutes dans un tortéfacteur usuel tournant à 80 tours par minute, et l'on obtient un produit final présentant un taux d'humidité de 2,8%, un volume spécifique réel de 0,86 cm3/g, et une couleur des fèves, déterminée sur les fèves elles-même, ayant les valeurs suivantes:

L = 14,2 a = 0,2 b = 0,3

On moud puis extrait la matière alimentaire avec de l'eau sous pression à 180 °C (extractibilité de 46-47%), et l'on obtient, après filtration, un liquide brun limpide de goût agréable rappelant celui du café fortement torréfié, et ayant comme composition, en % de matière sèche: 21% de sucres totaux, 58% de protéines.

On déshydrate l'extrait aqueux ainsi obtenu par lyophilisation, de manière à obtenir un produit pulvérulent, pouvant se reconstituer par dissolution dans l'eau froide ou chaude.

Exemple 3

Soit 50 kg de fèves de soja décortiquées, que l'on introduit dans une enrobeuse de type Glatt-Coater GC 1000 (marque commerciale), tournant à 20 tours par minute.

On spraye sur les fèves en mouvement une solution aqueuse contenant 45% de saccharose et 5% de sorbitol, préalablement chauffée à 60°C, à l'aide d'un courant d'air chaud à 70°C, avec un débit qui passe progressivement de 5 à 8 litres par heure.

On effectue cet enrobage pendant environ 4 heures, de manière à obtenir un produit présentant, en poids de matière sèche, un rapport saccharose-sorbitol/fèves de 20/100.

On tortéfie les fèves ainsi enrobées dans un tortéfacteur usuel, pendant 6 minutes à 220°C (température du tambour).

On obtient une matière alimentaire présentant un taux d'humidité de 2,2%, un volume spécifique réel de 0,85 cm$^3$/g et une couleur des fèves, déterminée sur les fèves elles-même, ayant les valeurs suivantes:

L = 15,0 a = 0,3 b = 0,5

et déterminée sur les fèves moulues :

L= 23,9 a = 5,4 b = 8,8

On moud puis extrait la matière alimentaire à l'eau bouillante (extractibilité de 24,9%), et l'on obtient un liquide de couleur claire, de goût agréable rappelant celui des noisettes torréfiées, ayant un pH de 5,8 et comme composition, en % de matière sèche: 16-17% de sucres totaux et 63,5% de protéines.

On déshydrate l'extrait aqueux ainsi obtenu par lyophilisation, de manière à obtenir un produit pulvérulent, pouvant se reconstituer instantanément par dissolution dans l'eau froide ou chaude.

**Revendications**

1. Procédé de preparation d'une matière alimentaire à base de soja, dans lequel on enrobe des fèves de soja avec une couche glucidique, en sprayant un ou plusieurs composés glucidiques en solution aqueuse sur les fèves, tout en séchant les fèves par circulation d'air chaud, puis on les torréfie.

2. Procéde selon la revendication 1, dans lequel la solution aqueuse contient de saccharose et de sorbitol.

3. Procéde selon la revendication 2, dans lequel la solution aqueuse contient 42 à 47% de saccharose et 2 à 7% de sorbitol.

4. Procéde selon l'une des revendications 1 à 3, dans lequel les fèves présentent un rapport glucidique/fèves de soja de 5-30/100, mesuré en poids de matière sèche.

5. Procéde selon l'une des revendications 1 à 4, comprenant une étape de prétraitement thermique avant l'enrobage de les fèves, dans laquelle les fèves sont chauffées à 180-195°C pendant 4 à 6 minutes.

6. Procédé de préparation d'un produit pulvérulent instantané soluble, dans lequel on moud la matière alimentaire obtenue selon l'une des revendications 1 à 5, on effectue une extraction aqueuse de ladite mouture et l'on déshydrate l'extrait obtenu.

**Claims**

1. Process for preparing a food material based on soya, wherein soya beans are coated with a carbohydrate layer, by spraying one or more carbohydrate compounds in aqueous solution onto the beans, while drying the beans by circulating hot air, and they are then roasted.

2. Process according to claim 1, wherein the aqueous solution contains sucrose and sorbitol.

3. Process according to claim 2, wherein the aqueous solution contains 42 to 47 % of sucrose and 2 to 7 % of sorbitol.

4. Process according to one of claims 1 to 3 wherein the beans have a carbohydrate/soya bean ratio of 5-30/100, measured in weight of dry material.

5. Process according to one of claims 1 to 4, comprising a heat pretreatment stage before the beans are coated, wherein the beans are heated to 180 - 195°C for 4 to 6 minutes.

6. Process for preparing an instantly soluble powdered product, wherein the food material obtained according to one of claims 1 to 5 is ground, the said ground material is extracted with water and the extract obtained is dehydrated.

**Patentansprüche**

1. Verfahren zur Herstellung eines Lebensmittelmaterials auf der Basis von Soja, bei dem man Sojabohnen mit einem Kohlenhydratüberzug umhüllt, indem man eine oder mehrere Kohlenhydratverbindung(en) in wäßriger Lösung auf die Bohnen sprüht, wobei man gleichzeitig die Bohnen mit zirkulierender Warmluft trocknet, und sie dann röstet.

2. Verfahren nach Anspruch 1, bei dem die wäßrige Lösung Saccharose und Sorbit enthält.

3. Verfahren nach Anspruch 2, bei dem die wäßrige Lösung 42 bis 47% Saccharose und 2 bis 7% Sorbit enthält.

4. Verfahren nach einem der Ansprüche 1 bis 3, bei dem die Bohnen ein Verhältnis Kohlenhydrat/Sojabohnen von 5 bis 30/100 aufweisen, und zwar gemessen in Gewicht der Trockenmasse.

5. Verfahren nach einem der Ansprüche 1 bis 4, das vor der Ümhüllung der Bohnen einen Schritt einer thermischen Vorbehandlung umfaßt, bei dem die Bohnen für 4 bis 6 Minuten auf 180 bis 195°C erwärmt werden.

6. Verfahren zur Herstellung eines sofortlöslichen Pulverprodukts, bei dem man das nach einem der Ansprüche 1 bis 5 erhaltene Nahrungsmittelmaterial mahlt, das Mahlgut wäßrig extrahiert und den erhaltenen Extrakt trocknet.